# EUROPEAN PATENT SPECIFICATION

(11) **EP 0 488 491 B1**
(45) Date of publication and mention of the grant of the patent: **03.01.1996**
(21) Application number: 91305091.0
(22) Date of filing: 05.06.1991
(51) Int. Cl.: C09K 3/10

(54) **Package including containers and use of compositions for sealing these containers**
Behälter enthaltende Verpackung und Verwendung von Verschlussdichtungen für diese Behälter
Emballages contenant des récipients et utilisation de compositions pour sceller ces récipients

(30) Priority: 30.11.1990 GB 9026053
(43) Date of publication of application: 03.06.1992
(73) Proprietor: W.R. Grace & Co.-Conn., New York, New York 10036 (US)
(72) Inventor: White, Steven Andrew Carl, Huntingdon, Cambridgeshire PE18 8BN (GB)
(74) Representative: Lawrence, Peter Robin Broughton

(56) References cited:
- EP-A- 0 129 309
- EP-A- 0 174 032
- GB-A- 2 108 943
- US-A- 4 833 206
- WORLD PATENTS INDEX Derwent PublicationsLtd.,London, GB; AN 73-26927U ; & JP-A-48 014 708

## Description

A wide variety of processes and compositions have been proposed for forming the gasket in container closures, for instance bottle caps. These include plastisols, solutions in organic solvents, aqueous dispersions (including aqueous latices) and mouldable thermoplastic compositions. They have all been proposed for a variety of container closure types.

A material that has been used very widely for forming the gaskets of, for instance, beer bottles is polyvinyl chloride plastisol. This gives good sealing properties and, in most instances, adequate impermeability to the migration through the gasket of gases, for instance odours from outside the container. However there is currently a desire to avoid the use of polyvinyl chloride in gaskets for containers for potable materials and so it would be desirable to avoid the use of polyvinyl chloride and to devise instead an alternative polymeric composition that could give sealing properties as good as or better than those obtained using polyvinyl chloride. Amongst the materials that could be considered are thermoplastic compositions.

An early disclosure of the use of thermoplastic compositions for forming container closures is in GB 1,112,025. This discusses a wide variety of ways of introducing the compositions into the cap and a wide variety of thermoplastic compositions that can be used. Thus it describes, for instance, blends of ethylene vinyl acetate copolymer (EVA) and micro crystalline wax, EVA and low density polyethylene (LDPE) having a melt flow index (MFI) of 7, similar blends containing also butyl rubber having Mooney viscosity of 70, a blend of equal amounts of LDPE having MFI 7 with butyl rubber having Mooney 70, blends of different types of EVA, a blend of LDPE with polyisobutylene, a blend of EVA with ethylene propylene copolymer, an ethylene acrylic acid ester copolymer, a blend of this with LDPE, a blend of LDPE with ethylene propylene copolymer, and a blend of LDPE with chloro sulphonated polyethylene.

Although cold moulding methods were also described in this and in GB 1,112,023, exemplified processes comprised forming a sheet of the appropriate blend, cutting it into discs and inserting the discs into crown closures.

Various disclosures of forming gaskets from thermoplastic compositions have appeared from time to time since then, for instance in EP 331,485, and these have listed a wide variety of polymers that can be used. Generally, most of the polymers named above have been listed.

A paramount need is to avoid off-tastes permeating from outside the container, through the gasket and into the potable composition. A particular problem arises with chlorinated phenols and chlorinated anisoles. The chlorinated phenols are often applied initially as fungicides and the chloro-anisoles are often generated as microbial metabolites of the chlorinated phenols. Polyvinyl chloride gaskets, despite having been found to be generally very satisfactory, do allow small amounts of permeation of such materials and this can, over a long period, contribute to an off-taste. It is therefore desirable to avoid prolonged storage of containers such as beer bottles close to a source of chlorinated phenol or chlorinated anisole. It would therefore be desirable to be able both to replace polyvinyl chloride and, if possible, to obtain a gasket that is even less permeable to chlorinated phenols and chlorinated anisoles.

Despite the very broad disclosure of polymers in GB 1,112,025, the thermoplastic compositions that have mainly been used have been those where the thermoplastic polymer is polyethylene, ethylene vinyl acetate copolymer, or a blend of these with each other. Unfortunately such compositions are much worse, as barriers to chlorinated phenols and anisoles than the traditional polyvinyl chloride gasketing compositions. Also it has long been recognised that the best barrier properties of all can often be obtained using a cork inlay with an aluminium facing. However such gaskets, although very effective, tend to be rather uneconomic and they are not satisfatory for pressurised containers.

PVC-free sealing compositions for bottle gaskets were described by DS-Chemie in EP-A-0250057.
In Die Brauwelt, 3, 1991, pages 47 and 48 it is stated "PVC compounds for crown closures are under attack, not only because of their PVC content, but also because of the plasticisers, which are the other main component of the (compound) formula. According to a communication from DS-Chemie, Bremen, PVC-free technology, amongst other, is based on the following raw materials: polyethylene, polypropylene, EVA, various rubber types such as SBS, SIS, butyl-rubber.
Depending on the combination of these various raw materials the properties, essential for the beverage industries, can be obtained".

This article mentioned certain effects such as reduced pressure-holding, oxygen barrier, and chloroanisole barrier effects. No actual compositions are described in the article (which was published after the priority date of this application). The polymers listed in this article are typical of those previously listed for possible use in PVC-free closures and so this article merely outlines the problems and does not offer any solution to these problems.

In GB-A-2108943 injection moulded stoppers for medical containers are described. The stopper is formed of a material which has rubber like elasticity so that it can reseal after being pierced with a needle or cannula. It is said to have oxygen barrier properties. The material includes a blend of 30 to 90% butyl rubber and 70 to 10% of a thermoplastic elastomer. The contents of medical containers are not under pressure and the stopper would be unsuitable to seal a container with pressurised contents.

A package according to the invention includes a bottle filled with potable material and that is formed of a body, a cap and a sealing gasket between the body and the cap, and the package includes a source of a volatile compound which can cause an off-taste, the body and the cap are impermeable to the volatile compound, and the gasket is formed from a thermoplastic composition that is a homogeneous blend of 20 to 60% by weight butyl rubber, which is a copolymer of isoprene and butylene, with 40 to 80% by weight other thermoplastic polymer.

Thus the invention is based on the discovery that these particular compositions (unlike those that have been commercialised and the large numbers of other compositions mentioned in the literature) are capable of giving excellent impermeability to chlorinated phenols and chlorinated anisoles and other volatile compounds that can cause an off taste. The resultant compositions are capable of giving impermeability as good as the impermeability with polyvinyl chloride and in practice it is often very much better than the impermeability using a polyvinyl chloride gasket.

The invention is of particular value when the package is one that provides a concentration of trichloroanisole in the environment around the bottles of at least 1x10⁻⁹g/l.

The invention also includes the use of a composition to form a gasket in bottle caps for sealing bottles which are to be packaged in a package containing a volatile compound that can cause an off-taste. The caps are preferably crown closures but can be roll-on or screw-on closures. They are preferably metal, but can be plastic. The closure may include a tamper-evident or pilfer-proof feature of any suitable design.

The invention also includes the use of a thermoplastic composition that is a homogeneous blend of 20 to 60% by weight butyl rubber which is a copolymer of isoprene and butylene, with 40 to 80% by weight other thermoplastic polymers, wherein the use is for forming a bottle cap gasket for a bottle that is to be filled with a potable material and is to be packaged in a package that includes a volatile source of an off-taste such as a volatile chlorinated phenol or chlorinated anisole.

The described package can be any package that includes a volatile source of an off-taste.

This volatile source of off-taste is preferably a volatile compound that, when absorbed into the potable material, will carry an off-taste into that material. The volatile source of off-taste can be a material that has been deliberately applied to the package or a component in the package (for instance a wood preservative) or can be a material that has been accidentally applied as a result of, for instance, previous use of the package for transporting a different product.

Accordingly the volatile source of off-taste can be substantially any volatile material that could be present in a truck, container or other package due to a previous shipment. Examples are paint solvents and thinners such as ketones, esters, aromatic solvents and white spirit, and volatile insecticides or other pesticides such as dichlorobenzene or chlorinated phenols, amongst a wide range of other volatile odours that will impart an off-taste.

The invention is, however, of particular value when the volatile compound that will impart an off-taste is a chlorinated phenol or chlorinated anisole, and so preferably the package includes a source of chlorinated phenol or chlorinated anisole such that the bottle or bottles within the package will be exposed to vapours of chlorinated phenol or chlorinated anisole during storage. For instance the package could be of jute but normally includes wood that may have been accidentally contaminated with a chlorinated material previously or, more usually, has been deliberately impregnated with chlorinated phenol to act as a wood preservative and which is therefore contaminated with chlorinated anisole.

The package can be a pallet on which a plurality of bottles are carried, for instance shrink wrapped on to the pallet. Alternatively or additionally the package can be a wooden crate containing the bottles. Alternatively the package can be a transport container that contains the bottles and wood containing chlorinated phenol or anisole, for instance crates or pallets loaded with the bottles.

The amount of butyl rubber is at least about 20% and is generally at least about 30% but is usually not more than about 50% by weight of the blend. Amounts of 35 or 40% to 50% are often preferred. The molecular weight can be relatively low or relatively high. Generally the rubber has Mooney (ML1+8 at 125°C) of below -60 and preferably below 56.

The one or more other thermoplastic polymers in the blend must be selected such that they can be blended with the butyl rubber to form a substantially homogeneous melt which can be extruded and moulded into the cap in a convenient manner to form an adherent gasket having the desired properties. The thermoplastic polymers conventionally mentioned in the literature for thermoplastic gaskets can be used for this purpose and, provided they are blended with butyl rubber in the desired proportions, it is relatively easy to select blends that give the surprising combination of good sealing properties and impermeability to chlorinated phenols and chlorinated anisoles.

Preferred thermoplastic materials are polyethylene or ethylene copolymers with butylene or other lower alkenes (such as octene), polypropylene, thermoplastic rubbers, ethylene propylene copolymers, acid modified ethylene propylene copolymers, polybutadienes, styrene butadiene rubber, carboxylated styrene butadiene, polyisoprene, styrene isoprene styrene block copolymers, styrene butadiene styrene block copolymers, styrene ethylene butylene styrene block copolymers, polystyrene, ethylene vinyl acetate copolymers, ethylene (meth) acrylate copolymers and ethylene vinyl alcohol copolymers.

Particularly preferred materials comprise polyethylenes. In some instances, it is preferred to use low density polyethylene but in general high density is more suitable. The melt flow index is typically in the range 5 to 30 but higher or lower may be used.

Blends of butyl with a mixture of 1 part styrene butadiene styrene block copolymer with 3 to 8 parts, often around 5 or 6 parts, polyethylene, generally LDPE, can give particularly good results, especially when the LDPE is a relatively low MFI polymer, typically in the range MFI 5 to 10.

Good results can also be obtained with ethylene propylene rubbers, especially when blended with a mineral oil, generally in the ratio of 1 part oil to 1.5 to 4, often around 2 to 3, parts by weight ethylene propylene rubber.

Blends of polyethylene (usually low density polyethylene), ethylene vinyl acetate copolymer and the butyl rubber are suitable but it is generally preferred to form the composition only of polyethylene and butyl rubber.

The gasket can be formed from the thermoplastic composition by placing the polymeric material in the cap and moulding it to form the gasket by various techniques. The presence of the butyl rubber in the thermoplastic composition can make it rather difficult to handle, and this has probably been a disincentive from using butyl rubber previously. The preferred method comprises placing a molten piece of the thermoplastic composition in the cap and then moulding the molten composition. At the time of placement and moulding the composition may be truly molten or may merely be soft.

It is preferred to form a molten mix of the butyl rubber and the thermoplastic polymer or polymers, for instance by melting a preformed mix in a melt extruder and to extrude the mix continuously and to transfer the desired pieces of molten mix direct from the point of extrusion to the individual caps. Processes of this general type are known as the HC (trade mark) cap, the Sacmi (trade mark) and the Zapata (trade mark) processes. Such processes are described in, for instance, U.S. 4,277,431, EP 73334, U.S. 3,705,122 and 4,518,336, and EP 207,385. It is particularly preferred to conduct the process as described in EP 331,485.

The dimensions of each cap will be selected according to the dimensions of the bottle and these dimensions, and the amount of thermoplastic composition deposited in each cap, will be conventional.

The potable material is preferably a beverage that is generally a carbonated beverage or beer.The use of the gasket in a beer bottle closure is claimed in copending application no. 91305090.2

As examples of the invention, blends of the thermoplastic compositions set out below are formed from the respective polymer pellets by melt mixing, and the melt are then inserted into a plurality of bottle crown caps and moulded into annular gaskets, using a commercial lining machine.

### Example 1

The lined crowns are closed on to glass bottles containing carbonated water having a carbonation level of 2.7 volumes and treated with 5% by volume ethanol in order to simulate beer. The bottles are then stored for 14 days at 30°C in an atmosphere containing 200µg/l 2,4,6-trichloroanisole (TCA). The bottles are then analysed for TCA content.

As a comparison, it should be noted that when a foamed plasticised PVC gasket is subjected to the same test, the measured TCA content at the end of the storage period is 123ng/l.

The results are set out in the following table.

It will be observed from these results that the gaskets formed from the materials usually used for thermoplastic container sealing compositions (G, H and I) all give poor results that are significantly worse than the polyvinyl chloride composition mentioned above. All the compositions illustrated in the table and that contained a butyl rubber give very much better results. A composition containing cross linked butyl rubber, is not as good as the others and this may be due to difficulties in obtaining a substantially homogeneous blend, due to the cross linking.

**Table**

| | A | B | C | D | E | |
|---|---|---|---|---|---|---|
| PE1 | 50 | - | - | - | - | - |
| PE2 | - | 50 | - | 50 | 50 | |
| PE3 | - | - | 50 | - | - | - |
| BU1 | 50 | 50 | 50 | - | 20 | - |
| BU2 | - | - | - | 50 | - | - |
| BU3 | - | - | - | - | 30 | |
| TCA Content (ng/l) | <1 | <1 | <1 | <1 | <1 | |
| | | | | | | |

| | F | G | H | I | J | K |
|---|---|---|---|---|---|---|
| PE1 | 100 | - | 50 | - | - | - |
| PE2 | - | - | - | 40 | 50 | 60 |
| EVA1 | - | 100 | 50 | - | - | - |
| EVA2 | - | - | - | 20 | - | - |
| BU1 | - | - | - | 40 | 50 | 40 |
| TCA Content (ng/l) | 1005 | 1160 | 370 | <2 | <2 | <2 |

- PE1 :: Low density polyethylene MFI:7, Density: 0.918 g/ml
- PE2 :: Low density polyethylene MFI;20, Density: 0.918 g/ml
- PE3 :: High density polyethylene MFI:11, Density 0.950 g/ml

- BU1 :: Low molecular weight isoprene/butylene copolymer.
- BU2 :: High molecular weight isoprene/butylene copolymer Mooney viscosity (ML1+8 at 125°) : 46-56
- BU3 :: Cross-linked isoprene/butylene copolymer

- EVA1 :: Ethylene vinyl acetate copolymer 9% vinyl acetate, MFI:9
- EVA2 :: Ethylene vinyl acetate copolymer 18% vinyl acetate, MFI:9

Amounts of the above components is given in parts by weight.

### Example 2

The following compounds were moulded into crowns and when closed onto 330ml glass bottles containing carbonated mineral water. The bottles were then stored for 10 days at room temperature in a sealed container containing p-dichlorobenzene (DCB). The concentration of DCB in the water was then measured.

| Composition | L | M | N | O |
|---|---|---|---|---|
| PE1 | | | | 85 |
| PE3 | 50 | | | |
| PE4 | | 45 | 45 | |
| BU1 | 50 | 45 | 40 | |
| SBS | | | | 15 |
| SEBS | | 10 | 15 | |
| ppm DCB | 70 | 80 | 120 | 400 |

- PE4 :: High density polyethylene, density 0.95; MFI 25
- SBS :: Styrene butadiene block copolymer 29.5% bound styrene
- SEBS :: Styrene ethylene butylene styrene block copolymer 29% bound styrene

The other components are as descrived above.

Again, this clearly demonstrates the surprising benefit obtained using compositions according to the invention including a copolymer of isoprene and butylene, in contrast to compositions free of a copolymer of isoprene and butylene.

## Claims

1. A package that includes a bottle filled with potable material and that is formed of a body, a cap and a sealing gasket between the body and the cap, in which the package includes a volatile compound that can cause an off-taste and the body and the cap are impermeable to the volatile compound and the gasket is formed from a thermoplastic composition that is a homogeneous blend of 20 to 60% by weight butyl rubber, which is a copolymer of isoprene and butylene, with 40 to 80% by weight other thermoplastic polymer.

2. A package according to claim 1 in which the amount of butyl rubber is from 30 to 50% by weight of the composition.

3. A package according to either preceding claim in which the butyl rubber has Mooney (ML1+8 at 125°C) of below 60.

4. A package according to an preceding claim in which the butyl rubber is a low molecular weight butyl rubber.

5. A package according to any preceding claim in which the said other thermoplastic polymer is selected from polyethylene or copolymer of ethylene with other lower alkenes, polypropylene, thermoplastic rubbers, ethylene propylene copolymers, acid modified ethylene propylene copolymers, styrene butadiene rubber, carboxylated styrene butadiene, polyisoprene, styrene isoprene styrene block copolymers, styrene butadiene styrene block copolymers, styrene ethylene butylene styrene block copolymers, polystyrene, ethylene vinyl acetate copolymers, ethylene (meth) acrylate copolymers and ethylene vinyl alcohol copolymers.

6. A package according to any preceding claim in which the said other thermoplastic polymer comprises polyethylene.

7. A package according to any preceding claim in which the volatile compound has been deliberately or accidentally applied to the package or is generated as a metabolite of a material that has been applied to the package.

8. A package according to any preceding claim in which the volatile compound is a chlorinated phenol and/or chlorinated anisole and the body and the cap are impermeable to the chlorinated phenol and/or chlorinated anisole.

9. A package according to any preceding claim in which the package comprises a wood pallet or crate or a container containing wood and wherein the wood has been impregnated with a chlorinated phenol wood preservative.

10. A package according to any preceding claim in which the gasket has been formed by placing a molten piece of the thermoplastic composition in the bottle cap and then moulding the molten composition to form the gasket in the cap.

11. Use of a thermoplastic composition for forming a bottle cap gasket for a bottle that is to be filled with a potable material, and in which the bottle is to be packed in a package that includes a volatile compound that can cause an off-taste and the composition is a homogeneous blend of 20 to 60% by weight butyl rubber, which is a copolymer of isoprene and butylene, with 40 to 80% by weight other thermoplastic polymer.

12. A use according to claim 11 in which the amount of butyl rubber is from 30 to 50% by weight of the composition.

13. A use according to claim 11 or claim 12 in which the butyl rubber has Mooney (ML1+8 at 125°C) of below 60.

14. A use according to any of claims 11 to 13 in which the said other thermoplastic polymer is selected from polyethylene or ethylene copolymer with other lower alkenes, polypropylene, thermoplastic rubbers, ethylene propylene copolymers, acid modified ethylene propylene copolymers, styrene butadiene rubber, carboxylated styrene butadiene, polyisoprene, styrene isoprene styrene block copolymers, styrene butadiene styrene block copolymers, styrene ethylene butylene styrene block copolymers, polystyrene, ethylene vinyl acetate copolymers, ethylene (meth) acrylate copolymers and ethylene vinyl alcohol copolymers.

15. A use according to any of claims 11 to 14 in which the said other thermoplastic polymer comprises polyethylene.

16. A use according to any of claims 11 to 15 in which the volatile compound has been deliberately or accidentally applied to the package or is generated as a metabolite of a material that has been applied to the package.

17. A use according to any of claims 11 to 16 in which the volatile compound is a chlorinated phenol and/or chlorinated anisole and the body and the cap are impermeable to the chlorinated phenol and/or chlorinated anisole.

18. A use according to any of claims 11 to 17 in which the package comprises a wood pallet or crate or a container containing wood and wherein the wood has been impregnated with a chlorinated phenol wood preservative.

19. A use according to any of claims 11 to 18 in which the gasket has been formed by placing a molten piece of the thermoplastic composition in the bottle cap and then moulding the molten composition to form the gasket in the cap.

## Patentansprüche

1. Verpackung, die eine mit trinkbarem Material gefüllte Flasche umfaßt, die aus einem Körper, einer Kappe und einer versiegelnden Dichtung zwischen dem Körper und der Kappe gebildet ist, wobei die Verpackung eine flüchtige Verbindung enthält, die einen schlechten Geschmack hervorrufen kann, der Körper und die Kappe für die flüchtige Verbindung undurchlässig sind und die Dichtung aus einer thermoplastischen Zusammensetzung gebildet ist, die eine homogene Mischung aus 20 bis 60 Gew.-% Butylkautschuk, der ein Copolymer aus Isopren und Butylen ist, und 40 bis 80 Gew.-% anderem thermoplastischem Polymer ist.

2. Verpackung nach Anspruch 1, bei der die Menge an Butylkautschuk bezogen auf das Gewicht der Zusammensetzung 30 bis 50 % ausmacht.

3. Verpackung nach einem der vorhergehenden Ansprüche, bei der der Butylkautschuk eine Mooney (ML1 + 8 bei 125°C) unterhalb von 60 aufweist.

4. Verpackung nach einem der vorhergehenden Ansprüche, bei der der Butylkautschuk ein Butylkautschuk mit niedrigem Molekulargewicht ist.

5. Verpackung nach einem der vorhergehenden Ansprüche, bei der das andere thermoplastische Polymer ausgewählt ist aus Polyethylen oder Copolymer von Ethylen mit anderen niederen Alkenen, Polypropylen, thermoplastischen Kautschuken, Ethylen/Propylen-Copolymeren, säuremodifizierten Ethylen/Propylen-Copolymeren, Styrol/Butadien-Kautschuk, carboxyliertem Styrol/Butadien, Polyisopren, Styrol/Isopren-/Styrol-Blockcopolymeren, Styrol/Butadien/Styrol-Blockcopolymeren, Styrol/Ethylen/Butylen/Styrol-Blockcopolymeren, Polystyrol, Ethylen/Vinylacetat-Copolymeren,Ethylen/(Meth)acrylat-Copolymeren und Ethylen/Vinylalkohol-Copolymeren.

6. Verpackung nach einem der vorhergehenden Ansprüche, bei der das andere thermoplastische Polymer Polyethylen umfaßt.

7. Verpackung nach einem der vorhergehenden Ansprüche, die eine flüchtige Verbindung umfaßt, die absichtlich oder zufällig auf die Verpackung aufgebracht worden ist oder als Metabolit eines auf die Verpackung aufgebrachten Materials erzeugt worden ist.

8. Verpackung nach einem der vorhergehenden Ansprüche, bei der die flüchtige Verbindung ein chloriertes Phenol und/oder chloriertes Anisol ist und der Körper und die Kappe für das chlorierte Phenol und/oder das chlorierte Anisol undurchlässig sind.

9. Verpackung nach einem der vorhergehenden Ansprüche, bei der die Verpackung eine Holzpalette, eine Holzlattenkiste oder einen Holz enthaltenden Behälter umfaßt, wobei das Holz mit einem chloriertes Phenol umfassendem Holzkonservierungsmittel imprägniert worden ist.

10. Verpackung nach einem der vorhergehenden Ansprüche, bei der die Dichtung gebildet worden ist, indem ein geschmolzenes Stück der thermoplastischen Zusammensetzung in die Flaschenkappe gegeben worden ist und dann die geschmolzene Zusammensetzung geformt worden ist, um die Dichtung in der Kappe zu bilden.

11. Verwendung einer thermoplastischen Zusammensetzung zur Bildung einer Flaschenkappendichtung für eine mit einem trinkbaren Material zu füllende Flasche, bei der die Flasche in einer Verpackung zu verpacken ist, die eine flüchtige Verbindung enthält, die schlechten Geschmack hervorrufen kann, und die Zusammensetzung eine homogene Mischung aus 20 bis 60 Gew.-% Butylkautschuk, der ein Copolymer aus Isopren und Butylen ist, und 40 bis 80 Gew.-% anderem thermoplastischem Polymer ist.

12. Verwendung nach Anspruch 11, bei der die Menge an Butylkautschuk bezogen auf das Gewicht der Zusammensetzung 30 bis 50 % ausmacht.

13. Verwendung nach Anspruch 11 oder Anspruch 12, bei der der Butylkautschuk eine Mooney (ML1 + 8 bei 125°C) unterhalb von 60 aufweist.

14. Verwendung nach einem der Ansprüche 11 bis 13, bei der das andere thermoplastische Polymer ausgewählt ist aus Polyethylen oder Ethylencopolymer mit anderen niederen Alkenen, Polypropylen, thermoplastischen Kautschuken, Ethylen/Propylen-Copolymeren, säuremodifizierten Ethylen/Propylen-Copolymeren, Styrol/Butadien-Kautschuk, carboxyliertem Styrol/-Butadien, Polyisopren, Styrol/Isopren/Styrol-Blockcopolymeren, Styrol/Butadien/Styrol-Blockcopolymeren, Styrol/Ethylen/Butylen/Styrol-Blockcopolymeren, Polystyrol, Ethylen/Vinylacetat-Copolymeren, Ethylen/(Meth)acrylat-Copolymeren und Ethylen/Vinylalkohol-Copolymeren.

15. Verwendung nach einem der Ansprüche 11 bis 14, bei der das andere thermoplastische Polymer Polyethylen umfaßt.

16. Verwendung nach einem der Ansprüche 11 bis 15, bei der die flüchtige Verbindung absichtlich oder zufällig auf die Verpackung aufgebracht worden ist oder als Metabolit eines Materials erzeugt worden ist, das auf die Verpackung aufgebracht worden ist.

17. Verwendung nach einem der Ansprüche 11 bis 16, bei der die flüchtige Verbindung ein chloriertes Phenol und/oder chloriertes Anisol ist und der Körper und die Kappe für das chlorierte Phenol und/oder das chlorierte Anisol undurchlässig sind.

18. Verwendung nach einem der Ansprüche 11 bis 17, bei der die Verpackung eine Holzpalette, eine Holzlattenkiste oder einen Holz enthaltenden Behälter umfaßt, wobei das Holz mit einem chloriertes Phenol umfassendem Holzkonservierungsmittel imprägniert worden ist.

19. Verwendung nach einem der Ansprüche 11 bis 18, bei der die Dichtung gebildet worden ist, in dem ein geschmolzenes Stück der thermoplastischen Zusammensetzung in die Flaschenkappe gegeben worden ist und dann die geschmolzene Zusammensetzung geformt worden ist, um die Dichtung in der Kappe zu bilden.

## Revendications

1. Emballage qui inclut une bouteille remplie avec un matériau consommable et qui est formé d'un corps, d'une capsule et d'un joint d'étanchéité entre le corps et la capsule, dans lequel l'emballage inclut un composé volatil et dans lequel le corps et la capsule sont imperméables au composé volatil et dans lequel le joint est formé d'une composition thermoplastique qui est un mélange homogène de 20 à 60% en poids de caoutchouc butyle avec 40 à 80% en poids d'un autre polymère thermoplastique.

2. Emballage selon la revendication 1, dans lequel la quantité de caoutchouc butyle est de 30 à 50% en poids de la composition.

3. Emballage selon toute revendication précédente dans lequel le caoutchouc butyle a un indice de Mooney (ML1 + 8 à 125°C) au-dessous de 60.

4. Emballage selon toute revendication précédente dans lequel le caoutchouc butyle est un caoutchouc butyle de faible poids moléculaire.

5. Emballage selon l'une quelconque des revendications précédentes, dans lequel ledit autre polymère thermoplastique est sélectionné parmi un polyéthylène ou copolymère d'éthylène avec d'autres alcènes inférieurs, un polypropylène, des caoutchoucs thermoplastiques, des copolymères éthylène propylène, des copolymères propylène éthylène modifiés par un acide, du caoutchouc butadiène styrène, du butadiène styrène carboxylé, du polyisopropène, des copolymères blocs styrène isoprène styrène, des copolymères blocs styrène butadiène styrène, des copolymères blocs styrène éthylène butylène styrène, du polystyrène, des copolymères éthylène acétate de vinyle, des copolymères éthylène (meth) acrylate et des copolymères éthylène alcool vinylique.

6. Emballage selon l'une quelconque des revendications précédentes, dans lequel ledit autre polymère thermoplastique comprend le polyéthylène.

7. Emballage selon l'une quelconque des revendications précédentes, dans lequel le composé volatil a été appliqué délibérément ou accidentellement à l'emballage ou est généré comme un métabolite d'un matériau qui a été appliqué à l'emballage.

8. Emballage selon l'une quelconque des revendications précédentes, dans lequel le composé volatil est une source d'anisole chloré et/ou de phénol chloré et le corps et la capsule sont imperméables au phénol chloré et/ou l'anisole chloré.

9. Emballage selon l'une quelconque des revendications précédentes, dans lequel l'emballage comprend une caisse ou palette de bois ou un récipient contenant du bois et dans lequel le bois a été imprégné avec un conservateur du bois de phénol chloré.

10. Emballage selon l'une quelconque des revendications précédentes, dans lequel le joint a été formé par placement d'une pièce fondue de la composition thermoplastique dans la capsule de la bouteille et ensuite le moulage de la composition fondue pour former le joint dans la capsule.

11. utilisation d'une composition thermoplastique pour former un joint de capsule de bouteille pour une bouteille qui est à remplir avec un matériau consommable, et dans lequel la bouteille est à emballer dans un emballage qui inclut un composé volatil qui peut produire un mauvais goût et la composition est un mélange homogène de 20 à 60% en poids du caoutchouc butyle, qui est un mélange d'isoprène et de butylène, avec 40 à 80% en poids d'un autre polymère thermoplastique.

12. Utilisation selon la revendication 11, dans laquelle la quantité de caoutchouc butyle est de 30 à 50% en poids de la composition.

13. Utilisation selon la revendication 11 ou 12, dans laquelle le caoutchouc butyle a un indice de Mooney (ML1 + 8 à 125°C) en dessous de 60.

14. Utilisation selon l'une quelconque des revendications 11 à 13, dans laquelle ledit autre polymère thermoplastique est choisi parmi un polyéthylène ou un copolymère d'éthylène avec d'autres alcènes inférieurs, le polypropylène, les caoutchoucs thermoplastiques, les copolymères éthylène propylène, les copolymères éthylène propylène modifiés par un acide, le caoutchouc styrène butadiène, le butadiène styrène carboxyé, le polyisoprène, les copolymères blocs styrène isoprène styrène, les copolymères blocs styrène butadiène styrène, les copolymères blocs styrène éthylène butylène styrène, le polystyrène, les copolymères éthylène acétate de vinyle, les copolymères éthylène (meth) acrylate et les copolymères éthylène alcool vinylique.

15. Utilisation selon l'une quelconque des revendications 11 à 14, dans laquelle ledit autre polymère thermoplastique comprend le polyéthylène.

16. Utilisation selon l'une quelconque des revendications 11 à 15, dans laquelle le composé volatil a été appliqué délibérément ou accidentellement à l'emballage ou est généré en tant que métabolite d'un matériau qui a été appliqué à l'emballage.

17. Utilisation selon l'une quelconque des revendications 11 à 16, dans laquelle le composé volatil est une source de phénol chloré et/ou d'anisole chloré et le corps et la capsule sont imperméables au phénol chloré et/ou à l'anisole chloré.

18. Utilisation selon l'une quelconque des revendications 11 à 17, dans laquelle l'emballage comprend une caisse ou une palette de bois ou un récipient contenant du bois et dans laquelle le bois a été imprégné avec un conservateur du bois à base de phénol chloré.

19. Utilisation selon l'une quelconque des revendications 11 à 18, dans laquelle le joint a été formé par placement d'une pièce fondue de la composition thermoplastique dans la capsule de la bouteille et ensuite moulage de la composition fondue à la forme du joint dans la capsule.
